(19) Europäisches Patentamt
European Patent Office
Office européen des brevets

(11) **EP 4 495 751 B1**

(12) **EUROPEAN PATENT SPECIFICATION**

(45) Date of publication and mention
of the grant of the patent:
**25.02.2026  Bulletin 2026/09**

(51) International Patent Classification (IPC):
**G06F 3/0488** (2022.01)    **H04M 1/72466** (2021.01)
**H04M 1/72472** (2021.01)

(21) Application number: **23791180.5**

(22) Date of filing: **17.04.2023**

(52) Cooperative Patent Classification (CPC):
**G06F 3/0488; G06F 3/04817; G06F 3/0482;
G06F 3/0484; H04M 1/72466; H04M 1/72472;
Y02D 30/70**

(86) International application number:
**PCT/CN2023/088659**

(87) International publication number:
**WO 2023/202525 (26.10.2023 Gazette 2023/43)**

(54) **FUNCTION ACTIVATION METHOD, USER INTERFACE AND ELECTRONIC DEVICE**

FUNKTIONSAKTIVIERUNGSVERFAHREN, BENUTZERSCHNITTSTELLE UND ELEKTRONISCHE VORRICHTUNG

PROCÉDÉ D'ACTIVATION DE FONCTION, INTERFACE UTILISATEUR ET DISPOSITIF ÉLECTRONIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **20.04.2022   CN 202210414857**

(43) Date of publication of application:
**22.01.2025   Bulletin 2025/04**

(73) Proprietor: **Huawei Technologies Co., Ltd.
Shenzhen, Guangdong 518129 (CN)**

(72) Inventors:
• **SUN, Yalei
Shenzhen, Guangdong 518129 (CN)**
• **ZHANG, Shuqing
Shenzhen, Guangdong 518129 (CN)**

(74) Representative: **Maiwald GmbH
Engineering
Elisenhof
Elisenstrasse 3
80335 München (DE)**

(56) References cited:
CN-A- 106 055 209      CN-A- 109 067 978
CN-A- 110 456 938      CN-A- 110 471 606
CN-A- 113 220 109      CN-A- 113 515 222
CN-A- 113 645 341      CN-A- 114 879 894
US-A1- 2013 027 313    US-A1- 2014 043 273
US-A1- 2014 071 060    US-A1- 2017 123 587

**Description**

This application claims priority to Chinese Patent Application No. 202210414857.2, filed with the China National Intellectual Property Administration on April 20, 2022 and entitled "FUNCTION ENABLING METHOD, USER INTERFACE, AND ELECTRONIC DEVICE' .

**TECHNICAL FIELD**

This application relates to the terminal field, and in particular, to a function enabling method, a user interface, and an electronic device.

**BACKGROUND**

As bezel-less screens are widely used, there are increasingly few physical buttons on electronic devices. In this case, a touch and hold operation can trigger many hidden functions. For example, a user may wake up a voice assistant by using a touch and hold operation that is performed on a power button on a mobile phone for fixed duration. However, for the touch and hold operation with fixed duration, if the fixed duration is too long, the user may wait for excessively long time when the user needs to use the voice assistant; or if the fixed duration is too short, when the user does not have a requirement for enabling the voice assistant, the voice assistant may be enabled due to an accidental touch, and consequently user experience is affected. Therefore, how to enable a corresponding function by using a touch and hold operation is an urgent problem to be resolved currently.

Patent application CN106055209A is prior art for the invention.

**SUMMARY**

This application provides a function enabling method, a user interface, and an electronic device, to dynamically adjust duration required by a touch and hold operation when the touch and hold operation triggers to enable a corresponding function.

According to a first aspect, this application provides a function enabling method, where the method includes: An electronic device detects a first touch and hold operation; and the electronic device enables a first function after the first touch and hold operation lasts for first duration, where the first duration is determined based on a frequency or a quantity of times of using the first function by the electronic device after the electronic device enables the first function by using a second touch and hold operation a plurality of times.

According to the method provided in the first aspect, the electronic device may dynamically adjust, based on the frequency of using the first function by a user after the user enables the first function by using the touch and hold operation, duration required by the touch and hold operation when the user enables the first function by using the touch and hold operation. In this way, the user does not need to enable a corresponding function based on fixed duration, and duration suitable for the user may be customized for different users according to usage habits of different users on applications or functions, to improve user experience of using the touch and hold operation.

With reference to the first aspect, in a possible implementation, when the frequency is greater than a first value, the first duration is a second value, or when the frequency is less than a third value, the first duration is a fourth value, where the second value is less than the fourth value. Alternatively, a higher frequency indicates shorter first duration and a lower frequency indicates longer first duration.

In some embodiments, when the frequency is in different intervals, different duration values may be correspondingly obtained. For example, when the frequency is in a first range, trigger duration of the touch and hold operation may be duration A. When the frequency is in a second range, trigger duration of the touch and hold operation may be duration B. When the frequency is in a third range, trigger duration of the touch and hold operation may be duration C. Values of the duration A, the duration B, and the duration C may gradually increase or decrease, and a difference between the duration A and the duration B is equal to a difference between the duration B and the duration C. In this case, when the frequency is different, the value of the first duration may also be the same.

In other embodiments, the first duration may be negatively correlated with the frequency. In this case, when the frequency is different, the value of the first duration is different.

It can be learned that when the user uses the first function at a high frequency, it indicates that the user needs to use the first function frequently, and the electronic device may shorten the duration of the touch and hold operation. In this way, it can be avoided that the user waits for excessively long time when the user may need to use the first function, and it can be ensured that the user enables and uses the first function as soon as possible. In addition, when the user uses the first function at a low frequency, the electronic device may prolong the duration required when the touch and hold operation triggers to enable the first function. In this way, the user needs to touch and hold the first function for long time to enable the first function, to prevent the user from enabling the first function due to an accidental touch as much as possible. This improves user experience when the user performs the touch and hold operation to enable the function.

With reference to the first aspect, in a possible implementation, the first touch and hold operation includes a touch and hold operation performed on a physical button or an interface element of the electronic device, the first function includes a voice assistant, and the voice assistant is configured to monitor a voice of the user, and make a response based on the voice.

In other words, the electronic device may dynamically adjust the duration required by the touch and hold operation when the user enables the voice assistant by using the touch and hold operation. When the user uses the voice assistant at a high frequency, the electronic device may shorten the duration required by the touch and hold operation, to ensure that the user can enable the voice assistant as soon as possible by performing a touch and hold operation when the user may need to use the voice assistant. Alternatively, when the user uses the voice assistant at a low frequency, the electronic device may prolong the duration required by the touch and hold operation, to prevent the user from enabling the first function due to an accidental touch, and improve experience of enabling the voice assistant by using the touch and hold operation.

With reference to the first aspect, in a possible implementation, before the electronic device detects the first touch and hold operation, the method further includes: The electronic device detects a third touch and hold operation; and the electronic device enables the first function after the third touch and hold operation lasts for second duration, where the second duration is different from the first duration.

In other words, the electronic device may dynamically adjust the trigger duration of the touch and hold operation, so that when the touch and hold operation of the user is received at different moments, the electronic device may enable the first function in response to the touch and hold operation when the touch and hold operation lasts for different duration. In this way, the user may enable the first function without performing the touch and hold operation of the fixed duration.

With reference to the first aspect, in a possible implementation, after the electronic device detects the first touch and hold operation, the method further includes: The electronic device collects first information by using a first sensor, where the first information represents a probability that the user uses the first function in the electronic device. The first duration is specifically determined based on the first information and the frequency of using the first function by the electronic device after the electronic device enables the first function by using the second touch and hold operation a plurality of times.

In other words, when determining the trigger duration based on the frequency of using the first function by the user, the electronic device may further determine the trigger duration with reference to other information collected by hardware of the electronic device. In this way, an intention of using the first function of the user can be analyzed from a plurality of perspectives, and more accurate trigger duration can be calculated as much as possible.

It may be understood that, not limited to information collected by hardware, the electronic device may further determine the trigger duration with reference to other information, for example, a screen-on state of a display, a battery level, network signal strength, and a screen-off state.

With reference to the first aspect, in a possible implementation, the first sensor includes a gravity sensor, and the first information includes a tilt angle of the electronic device; and/or the first sensor includes a distance sensor, and the first information includes a distance between the electronic device and the user.

With reference to the first aspect, in a possible implementation, after the electronic device enables the first function in response to the first touch and hold operation, the method further includes: After the first touch and hold operation continues for third duration, the electronic device disables the first function and enables a second function.

In other words, when duration of touch and hold operations are different, the electronic device may trigger to enable different functions. For example, when a touch and hold operation performed by the user on a power button reaches 0.5s, the electronic device may enable the voice assistant. When a touch and hold operation continues for 3s, the electronic device may shut down. In this way, the user may control, by using only one touch and hold operation, different duration of the touch and hold operation to trigger to enable different functions, so that a more convenient enabling manner is provided for the user to enable different functions.

With reference to the first aspect, in a possible implementation, before the electronic device detects the first touch and hold operation, the method further includes: When a first condition is met, the electronic device determines the frequency of using the first function by the electronic device after the first function is enabled by using the second touch and hold operation a plurality of times, where the first condition includes but is not limited to one or more of the following: the electronic device disables the first function, preset time is reached, or the quantity of times of enabling the first function by the electronic device by using the second touch and hold operation reaches a preset quantity of times.

In other words, the electronic device may trigger, when the preset condition is met, to determine the frequency of using the first function by the user, that is, an invalid wakeup proportion. The preset condition may include one or more of the following: after the first function is disabled, an adjustment interval reaches preset time, a quantity of times of recorded use behaviors reaches a preset quantity, the user triggers, and the like. For example, after disabling the first function, the electronic device may determine whether the adjustment interval is greater than the preset time. If the adjustment interval is greater than the preset time, the electronic device further determines whether the quantity of the recorded use behaviors is greater than the preset quantity. If the quantity of the recorded use behaviors is greater than the preset quantity, the electronic device may trigger to determine the invalid wakeup proportion.

With reference to the first aspect, in a possible implementation, the plurality of second touch and hold operations are a part of or all touch and hold operations that are used to enable the first function and that are detected before the electronic device detects the first touch and hold operation.

In other words, when the electronic device determines the frequency of using the first function by the user, the touch and hold operations obtained through statistics may be all or some touch and hold operations that are used to enable the first function before the electronic device receives the first touch and hold operation.

When the touch and hold operations obtained through statistics are all touch and hold operations, the electronic device may calculate the invalid wakeup proportion based on all use behaviors of the user, to avoid missing a use behavior of the user, and ensure that the electronic device can dynamically adjust the trigger duration with reference to the using of the first function by the user in all time periods after the first function is enabled by using the touch and hold operation.

When the touch and hold operations obtained through statistics are some touch and hold operations, the electronic device may calculate the invalid wakeup proportion based only on some use behaviors, to accelerate a parameter operation speed.

The some touch and hold operations may be touch and hold operations collected by the electronic device after previous determining of the use frequency. In other words, the electronic device may obtain a latest use behavior recorded by the electronic device after previous determining of the invalid wakeup proportion, and determine the invalid wakeup proportion based on the use behavior. In this way, each time the electronic device calculates the invalid wakeup proportion, the electronic device may determine the invalid wakeup proportion based on a latest use behavior of the user, so that the electronic device can dynamically adjust the trigger duration based on a change of the frequency of using the first function by the user. This prevents a very early use of the first function by the user from affecting a latest calculation result of the invalid wakeup proportion. Alternatively, the some touch and hold operations may be a preset quantity of touch and hold operations. In this way, the electronic device may calculate the invalid wakeup proportion based on a fixed quantity of use behaviors each time, to stabilize a parameter operation speed.

With reference to the first aspect, in a possible implementation, that the electronic device uses the first function includes: The electronic device receives a user operation, and performs the first operation on the first function.

That the electronic device uses the first function may mean that after enabling the first function, the electronic device obtains data that is input by the user and that is required by the first function, and the electronic device responds based on the data. The data required by the first function may include but is not limited to a voice, a text, a picture, information indicating a touch operation of the user, and the like. The response may include but is not limited to: changing display content, outputting a voice, vibration, changing a device status (for example, changing from a standby state to a shut-down state), and the like.

According to a second aspect, an embodiment of this application provides an electronic device, including a memory, one or more processors, and one or more programs. When the one or more processors execute the one or more programs, the electronic device is enabled to implement the method according to any one of the first aspect or the implementations of the first aspect.

According to a third aspect, an embodiment of this application provides a computer-readable storage medium, including instructions. When the instructions are run on an electronic device, the electronic device is enabled to perform the method according to any one of the first aspect or the implementations of the first aspect.

According to a fourth aspect, an embodiment of this application provides a computer program product. When the computer program product runs on a computer, the computer is enabled to perform the method according to any one of the first aspect or the implementations of the first aspect.

## BRIEF DESCRIPTION OF DRAWINGS

FIG. 1A, FIG. 1B, FIG. 2A, FIG. 2B, FIG. 3A, and FIG. 3B are some user interfaces according to an embodiment of this application;
FIG. 4 is a diagram of a hardware structure of an electronic device according to an embodiment of this application;
FIG. 5 is a schematic flowchart of a function enabling method according to an embodiment of this application; and
FIG. 6 is a diagram of a structure of function enabling apparatus according to an embodiment of this application.

## DESCRIPTION OF EMBODIMENTS

The technical solutions according to embodiments of this application are clearly and completely described in the following with reference to the accompanying drawings. In the descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

A term "user interface (user interface, UI)" in the following embodiments of this application is a medium interface for interaction and information exchange between an application program or an operating system and a user, and implements conversion between an internal form of information and a form that can be accepted by the user. The user interface is source code written in a specific computer language such as Java or an extensible markup language (extensible markup language, XML). Interface source code is parsed and rendered on an electronic device, and is finally presented as content that can be identified by the user. The user interface is usually represented in a form of a graphical user interface (graphical user interface, GUI), and is a user interface that is related to a computer operation and that is displayed in a graphic manner. The user interface may be a visual interface element such as a text, an icon, a button, a menu, a tab, a text box, a dialog box, a status bar, a navigation bar, or a Widget that is displayed on a display screen of the electronic device.

Embodiments of this application provide a function enabling method. According to the method, an electronic device may detect a touch and hold operation, and enable a first function in response to the touch and hold operation. First, the electronic device may record a use behavior of whether a user uses the first function after the user enables the first function by using the touch and hold operation a plurality of times. Then, a frequency of using the first function by the user is determined based on the use behavior, and trigger duration of the touch and hold operation is determined based on the frequency, where a higher frequency of using the first function by the user indicates shorter trigger duration, and a lower frequency of using the first function by the user indicates longer trigger duration. Finally, when the electronic device detects a touch and hold operation, and duration of the touch and hold operation reaches the trigger duration, the electronic device triggers to enable the first function.

It can be learned that the electronic device may dynamically adjust, based on the frequency of using the first function after the user enables the first function by using the touch and hold operation, duration required by the touch and hold operation when the user enables the first function by using the touch and hold operation. When the user uses the first function at a high frequency, it indicates that the user needs to use the first function frequently, and the electronic device may shorten the duration of the touch and hold operation. In this way, it can be avoided that the user waits for excessively long time when the user may need to use the first function, and it can be ensured that the user can enable and use the first function as soon as possible. In addition, when the user uses the first function at a low frequency, the electronic device may prolong the duration required when the touch and hold operation triggers the first function. In this way, the user needs to perform the touch and hold operation for long time to enable the first function, to prevent the user from enabling the first function due to an accidental touch as much as possible. This reduces an incorrect response of the electronic device as much as possible, and improves user experience when the user performs the touch and hold operation to enable the function.

In some embodiments, the electronic device may further determine the trigger duration with reference to another factor. For example, the electronic device may further determine the trigger duration based on a tilt angle of the electronic device, a distance between the electronic device and the user, and the like, to more accurately predict whether the user has an intention to enable the first function, and dynamically adjust the duration required by the touch and hold operation when the user enables the first function by using the touch and hold operation. For a specific manner in which the electronic device further determines the trigger duration with reference to another factor, refer to detailed descriptions in subsequent embodiments.

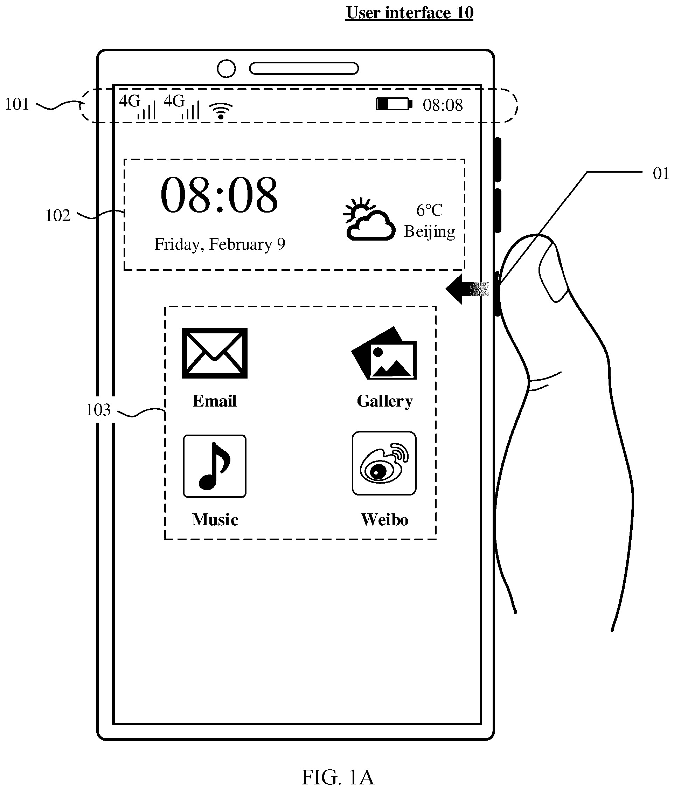

With reference to FIG. 1A, FIG. 1B, FIG. 2A, FIG. 2B, FIG. 3A, and FIG. 3B, the following describes, by using different objects on which a touch and hold operation is performed, some application scenarios related to the function enabling method provided in embodiments of this application.

Application scenarios related to the function enabling method provided in embodiments of this application may include but are not limited to the following two types.

(1) Touch and hold a physical button

The physical button may include but is not limited to a power button, a volume button, a home button, and the like.

The electronic device may detect a touch and hold operation performed by the user on the physical button, and in response to the operation, trigger to enable a corresponding function of the electronic device.

For example, the electronic device may detect a touch and hold operation on the power button, and in response to the operation, trigger to enable a corresponding function of the electronic device, for example, shutting down, restarting, or enabling a voice assistant. Alternatively, for example, the electronic device may detect a touch and hold operation performed on the home button, and in response to the operation, trigger to enable a corresponding function of the electronic device, for example, the voice assistant.

The voice assistant is a voice detection function provided by the electronic device. The voice detection function may enable the electronic device to detect a voice input of the user, and make a corresponding response to the voice input of the user, for example, perform a voice response, start an application, or change a device configuration. In this way, the user can control the electronic device more quickly and conveniently by using a voice. It should be understood that, in embodiments of this application, the voice assistant may alternatively be referred to as voice detection, a voice function, a voice detection function, an intelligent voice assistant, or the like. The name is not limited in embodiments of this application.

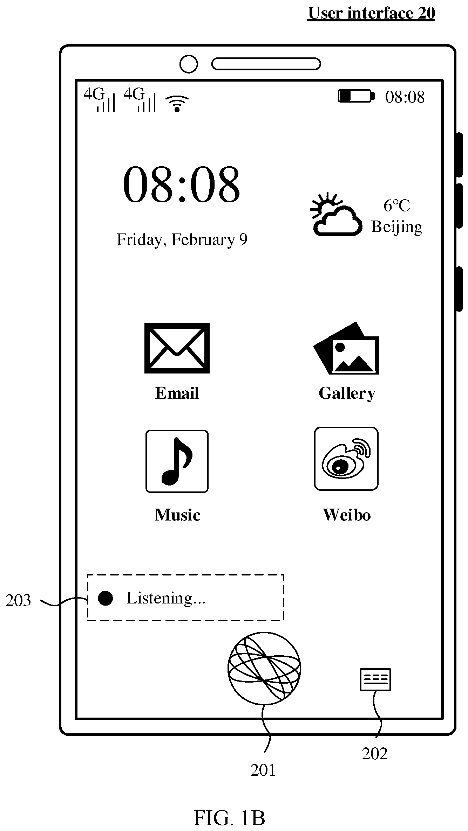

With reference to FIG. 1A and FIG. 1B, the following describes some user interfaces related to detecting a touch and hold operation performed on the power button and enabling the voice assistant by the electronic device.

FIG. 1A shows an example of a user interface 10 for an application menu on the electronic device. The user interface 10 may be used to display time, weather, one or more application icons, and the like. Specifically, the user interface 10 may include a status bar 101, a calendar and weather icon 102, and one or more application icons 103. Details are as follows:

The status bar 101 may include one or more signal strength indicators of a mobile communication signal, one or more signal strength indicators of a wireless fidelity (wireless fidelity, Wi-Fi) signal, a battery status indicator, and a time indicator. The calendar and weather icon 102 may indicate current time and a weather type. The one or more application icons 103 may be used to display application icons of one or more applications.

In addition, FIG. 1A further shows a power button 01 of the electronic device.

As shown in FIG. 1A, when the electronic device detects a touch and hold operation performed on the power button 01, after the touch and hold operation lasts for specific duration, the electronic device displays a user interface 20 shown in FIG. 1B.

As shown in FIG. 1B, the user interface 20 may include a voice identifier 201, a keyboard icon 202, and prompt information 203. The voice identifier 201 may be used to prompt the user that the electronic device currently enables a voice assistant, and the electronic device is monitoring a voice input of the user. The keyboard icon 202 may be used to trigger to input a text, so that the electronic device performs a corresponding operation based on the text. The prompt information 203 may be used to display a text converted from a user voice recognized by the electronic device. Before the electronic device recognizes the voice of the user, the prompt information 203 may further prompt the user that the electronic device is currently monitoring the voice input of the user.

In some embodiments, after the electronic device enables the voice assistant, the electronic device may display, in a background of the user interface 20, content that is on a user interface (for example, the user interface 10) displayed before the electronic device enables the voice assistant. In addition, the electronic device may change a color of the background. For example, when the electronic device switches from displaying the user interface 10 shown in FIG. 1A to displaying the user interface 20 shown in FIG. 1B, an overall color that is of the content displayed on the user interface 10 and that is on the user interface 20 is deepened.

It should be understood that a user interface displayed after the electronic device enables the voice assistant is not limited in embodiments of this application. After the electronic device enables the voice assistant, the electronic device may no longer display the content displayed before the voice assistant is enabled, and may display only the voice identifier 201, the keyboard icon 202, the prompt information 203, and the like.

In some embodiments, in addition to detecting the touch and hold operation and triggering to enable the voice assistant when the user interface 10 shown in FIG. 1A is displayed, the electronic device may further detect a touch and hold operation and trigger to enable the voice assistant when a screen is turned off or when another user interface, for example, a user interface provided by an application, is displayed. A user interface displayed when the electronic device detects a touch and hold operation, or whether the electronic device is in a screen-on or screen-off state is not limited in embodiments of this application.

It can be learned from FIG. 1A and FIG. 1B that the electronic device may detect the touch and hold operation performed on the power button, and trigger to enable the voice detection function. Then, the electronic device may detect the voice input of the user, and make a response to the voice, so that the user can quickly control the electronic device by using the voice detection function.

It should be understood that, after the electronic device detects the touch and hold operation performed on the power button, a response made by the electronic device is not limited to shutting down, restarting, and enabling the voice assistant. For example, the electronic device may trigger only display of a shut-down interface including a shut-down control. After the electronic device detects a confirm operation performed by the user on the shut-down control, the electronic device triggers shutting down. Alternatively, the electronic device may display only a prompt indicating whether to enable the voice assistant. After detecting an operation of enabling the voice assistant by the user, the electronic device triggers to enable the voice assistant. After detecting the touch and hold operation and another user operation, the electronic device may trigger to enable a first function.

(2) Touch and hold an element on a user interface:

The user interface may include visual interface elements such as an icon, a text, a button, a menu, a tab, a text box, a dialog box, a status bar, a navigation bar, and a blank area. Therefore, the electronic device may detect a touch and hold operation performed by the user on any interface element on the user interface, and in response to the operation, enable a corresponding function included in the electronic device.

In some embodiments, the electronic device may detect a touch and hold operation in a blank area on a desktop of a home screen, and trigger to display an editing interface for the desktop in response to the operation. The user may adjust icons on the desktop (for example, adjust a sequence or delete an icon), modify a layout of the home screen, change a wallpaper, and the like by using the editing interface.

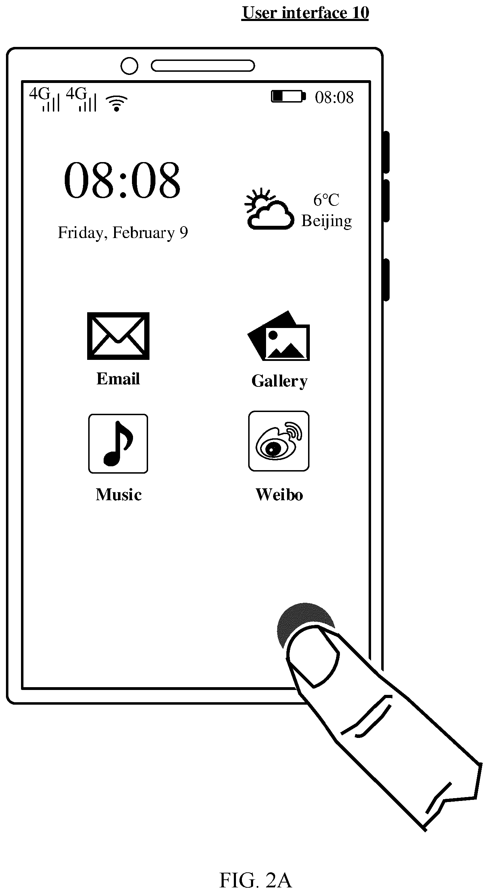

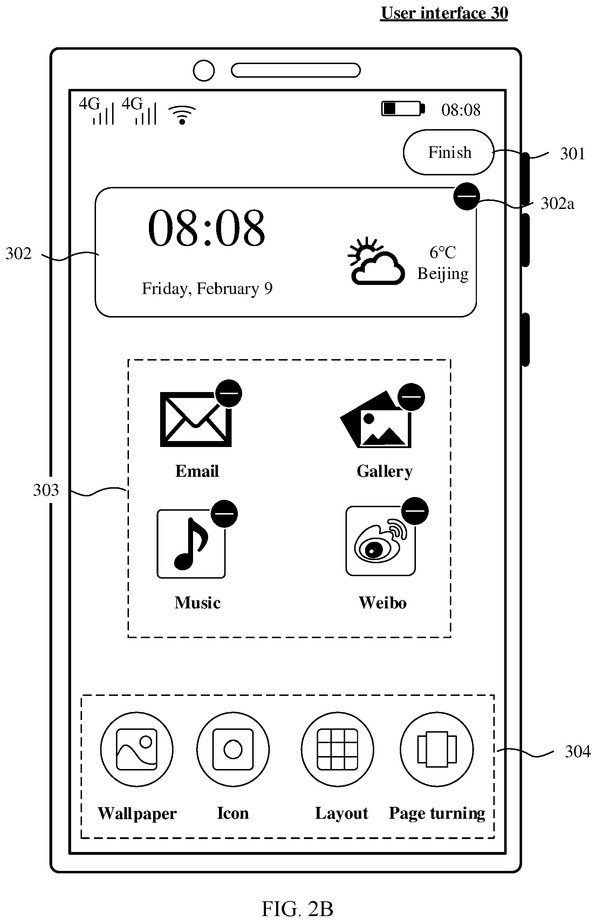

With reference to FIG. 2A and FIG. 2B, the following describes some user interfaces related to detecting a touch and hold operation performed on the desktop and displaying the editing interface by the electronic device.

FIG. 2A shows an example of a user interface 10 for an application menu on the electronic device. The user interface 10 may be used to display time, weather, one or more application icons, and the like. For specific descriptions of the user interface 10, refer to related content in FIG. 1A. Details are not described herein again. In addition, an area in which the user interface 10 is located may be referred to as a desktop of the electronic device.

As shown in FIG. 2A, when the electronic device detects a touch and hold operation performed in a blank area on the desktop, after the touch and hold operation lasts for specific duration, the electronic device displays a user interface 30 shown in FIG. 2B. The user interface 30 is an editing interface for content displayed on the user interface 10.

As shown in FIG. 2B, the user interface 30 may include a confirm control 301, a calendar and weather editing icon 302, one or more application editing icons 303, and a menu bar 304. Details are as follows:
The confirm control 301 may be configured to complete editing, and save adjustment performed by the user on displayed content on the editing interface.

The calendar and weather editing icon 302 may be used to move and delete the calendar and weather icon 102 shown in FIG. 1A. Specifically, the electronic device may detect a drag operation performed on the calendar and weather editing icon 302, and move a location of the calendar and weather editing icon 302 on the user interface 30, to change a location of the calendar and weather icon 102 on the user interface 10. In addition, the calendar and weather editing icon 302 may include a delete control 302a. The delete control 302a may be configured to trigger to delete the calendar and weather editing icon 302, and remove the calendar and weather icon 102 from the user interface 10.

The one or more application editing icons 303 may be used to move and delete the one or more application icons 103 shown in FIG. 1A. The one or more application editing icons 303 may include editing icons of one or more applications. The electronic device may detect a move or delete operation performed on the editing icon, and move or delete an application icon corresponding to the editing icon. Therefore, an application icon included in the one or more application icons 103 is moved or deleted.

The menu bar 304 may include one or more menu options. For example, as shown in FIG. 2B, the menu bar 304 may include a plurality of menu options such as a wallpaper option, an icon option, a layout option, and a page turning option. These menu options may be used to separately trigger to adjust a desktop wallpaper, an application icon, a page layout, and a page turning manner.

It can be learned from FIG. 2A and FIG. 2B that the electronic device may detect the touch and hold operation performed in the blank area on the desktop, trigger to enable a desktop editing function, and display the editing interface. Then, the electronic device may detect an operation performed by the user on the editing interface, and edit the desktop, so that the desktop can be adjusted by using the desktop editing function.

In some other embodiments, the electronic device may detect a touch and hold operation performed on a setting icon, and in response to the operation, trigger to display a setting interface of a setting option corresponding to the setting icon. The user may adjust configuration information of the setting option by using the setting interface.

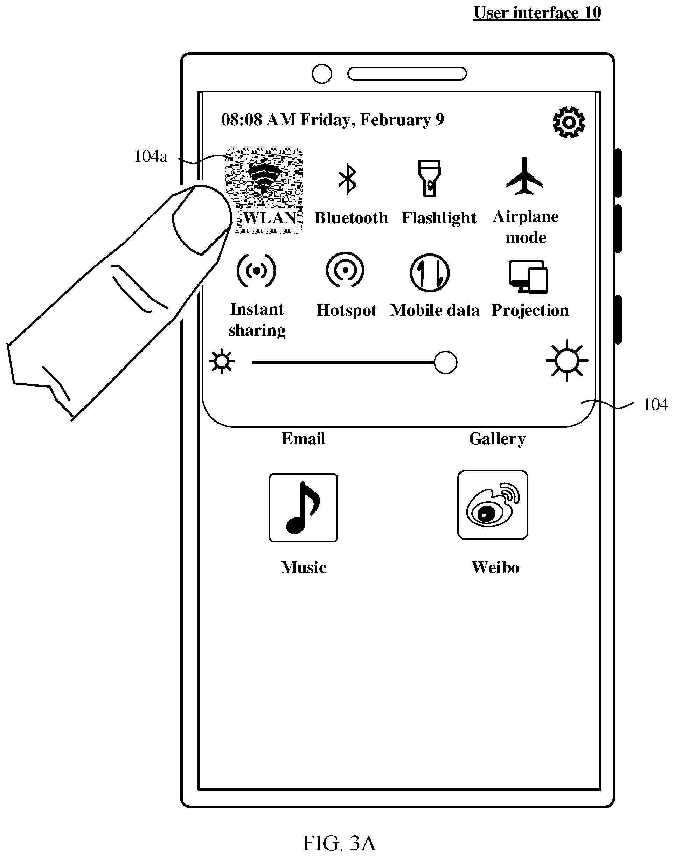

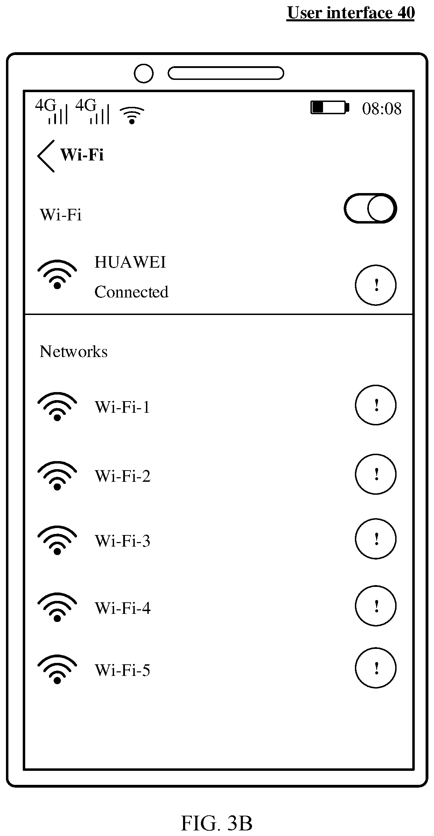

With reference to FIG. 3A and FIG. 3B, the following describes some user interfaces related to detecting a touch and hold operation performed on the setting icon and displaying the setting interface by the electronic device.

FIG. 3A may be an example of a user interface 10 for an application menu on the electronic device. For specific descriptions of the user interface 10, refer to related content in FIG. 1A. Details are not described herein again.

In addition, the user interface 10 further includes a drop-down menu 104. For example, the electronic device may detect a slide-down operation performed on the user interface 10 shown in FIG. 1A, and may display the drop-down menu 104 on the user interface 10 in response to the operation.

The drop-down menu 104 may be used to display setting icons corresponding to one or more setting options, including setting icons of setting options such as WLAN, Bluetooth, flashlight, an airplane mode, instant sharing, a hotspot, mobile data, and projection. As shown in FIG. 3A, the drop-down menu 104 may include a WLAN setting icon 104a, and the WLAN setting icon 104a may be used to set a Wi-Fi network of the electronic device 100.

As shown in FIG. 3A, when the electronic device detects a touch and hold operation performed on the WLAN setting icon 104a, after the touch and hold operation lasts for specific duration, the electronic device displays a user interface 40 shown in FIG. 3B, where the user interface 40 is a detailed setting interface of the WLAN setting option. The interface may be used to display Wi-Fi connected to the electronic device and Wi-Fi that can be connected to the electronic device. The user may view and change, through the interface, the Wi-Fi connected to the electronic device.

It can be learned from FIG. 3A and FIG. 3B that the electronic device may detect the touch and hold operation performed on the setting icon, trigger the setting function of enabling the setting option, and display the setting interface. Then, the electronic device may detect the setting operation performed by the user on the setting interface, and implement setting of the setting option, to achieve an objective of adjusting configuration information of the setting option by the user by using the setting function.

It should be understood that the touch and hold operation performed on the interface element and detected by the electronic device is not limited to the application scenarios shown in FIG. 2A and FIG. 2B and FIG. 3A and FIG. 3B. The electronic device may further detect a touch and hold operation performed on an application icon, to display a hidden function menu of the application. For example, when a touch and hold operation is performed on a music application icon, a hidden function menu including function options such as application details, uninstallation, sharing, and music recognition is displayed. Embodiments of this application impose no limitation on the touch and hold operation performed on the interface element and detected by the electronic device and the enabled function.

It should be noted that, in embodiments of this application, an action object of the touch and hold operation is not limited to the physical button, the user interface, or the like mentioned above, and the action object of the touch and hold operation is not limited in embodiments of this application. In addition, in embodiments of this application, a quantity of objects on which the touch and hold operation is performed is not limited. For example, the electronic device may detect a touch and hold operation performed by the user on both a volume button and a power button, to enable a photographing function.

In general, the electronic device may detect a touch and hold operation performed on a physical button or an interface element, to enable a corresponding function, for example, a voice assistant, a search function, a picture recognition function, an NFC function, a photographing function, or a recording function. The function may be used to provide a service for the user. After the function is enabled, the user may input data required by the function, so that the electronic device makes a response based on the data, and the user can use the function. In addition, when the electronic device enables a corresponding function, the electronic device may display a user interface related to the function, input a voice, vibrate, change a device status (change from a screen-off state to a screen-on state), or the like. A response made by the electronic device after the electronic device detects the touch and hold operation is not limited in embodiments of this application.

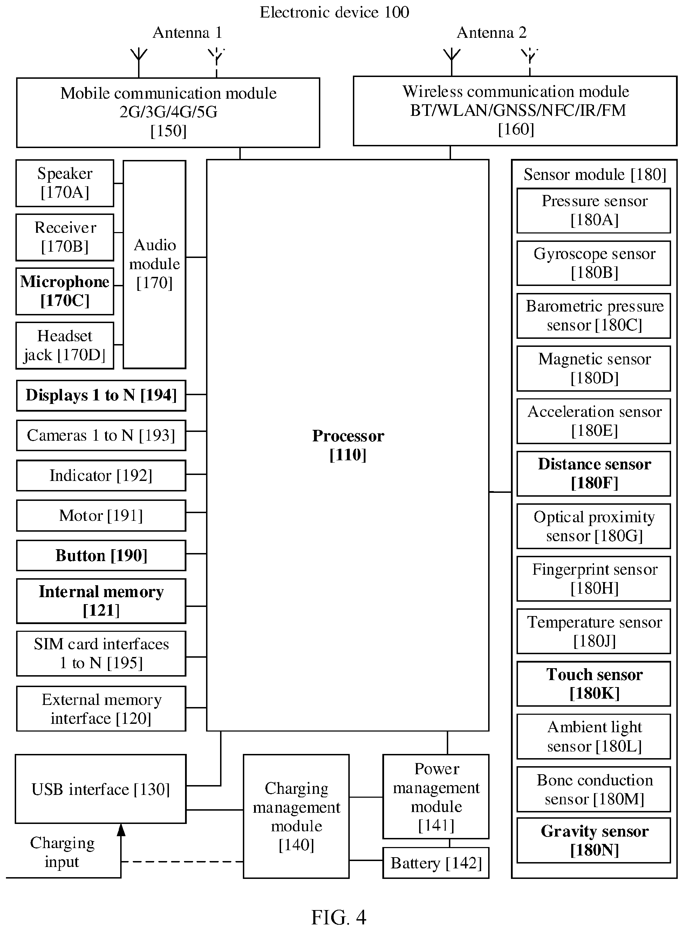

FIG. 4 is a diagram of a hardware structure of an electronic device 100.

The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not limited in embodiments of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, a gravity sensor 180N, or the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

In some embodiments, the processor 110 may be configured to: in response to a touch and hold operation of a user, enable a first function, determine, based on a record of whether the user uses the first function, a frequency of using the first function by the user, calculate trigger duration of the touch and hold operation, and when the touch and hold operation is received, determine whether duration of the touch-and-hold operation reaches the trigger duration. For details about the first function, a criterion for determining whether the user uses the first function, a calculation principle of the trigger duration, and the like, refer to subsequent embodiments. Details are not described herein.

The controller may generate an operation control signal based on instruction operation code and a time sequence signal, to complete control of instruction fetching and instruction execution.

A memory may be further disposed in the processor 110, and is configured to store instructions and data.

The charging management module 140 is configured to receive a charging input from a charger.

The power management module 141 is configured to connect to the battery 142, the charging management module 140, and the processor 110.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed, to improve antenna utilization.

The mobile communication module 150 may provide a wireless communication solution that is applied to the electronic device 100 and that includes 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1.

The modem processor may include a modulator and a demodulator. The modulator is configured to modulate a to-be-transmitted low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology.

The electronic device 100 may implement a display function through the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, and the one or more GPUs execute program instructions to generate or change display information.

The display 194 is configured to display an image, a video, and the like. The display 194 includes a display panel.

In some embodiments, the display 194 may be configured to display user interfaces related to the first function, such as user interfaces shown in FIG. 1A, FIG. 1B, FIG. 2A, FIG. 2B, FIG. 3A, and FIG. 3B. For specific descriptions of the user interfaces, refer to the foregoing content. Details are not described herein again.

The electronic device 100 may implement a photographing function through the ISP, the camera 193, the video codec, the GPU, the display 194, the application processor, and the like.

The ISP is configured to process data fed back by the camera 193.

The camera 193 may be configured to capture a static image or a video.

The digital signal processor is configured to process a digital signal, and may process another digital signal in addition to the digital image signal.

The video codec is configured to compress or decompress a digital video.

The internal memory 121 may be one or more random access memories (random access memory, RAM), and one or more non-volatile memories (non-volatile memory, NVM).

The external memory interface 120 may be configured to connect to an external non-volatile memory, to expand a storage capability of the electronic device 100.

The electronic device 100 may implement an audio function such as music playing or recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or speech information is received through the electronic device 100, the receiver 170B may be put close to a human ear to listen to a voice.

The microphone 170C, also referred to as a "mic" or a "sound conducting device", is configured to convert a sound signal into an electrical signal. When making a call or transmitting a voice message, a user may make a sound near the microphone 170C through a mouth of the user, to input a sound signal to the microphone 170C. At least one microphone 170C may be disposed in the electronic device 100.

In some embodiments, when the first function is a voice detection function, the microphone 170C may be configured to monitor a voice output by the user.

The headset jack 170D is configured to connect to a wired headset.

The pressure sensor 180A is configured to sense a pressure signal, and can convert the pressure signal into an electrical signal.

The gyroscope sensor 180B may be configured to determine a moving posture of the electronic device 100. In some embodiments, angular velocities of the electronic device 100 around three axes (namely, axes x, y, and z) may be determined through the gyroscope sensor 180B. The gyroscope sensor 180B may be configured to implement image stabilization during photographing.

The barometric pressure sensor 180C is configured to measure barometric pressure.

The magnetic sensor 180D includes a Hall sensor. The electronic device 100 may detect opening and closing of a flip cover by using the magnetic sensor 180D.

The acceleration sensor 180E may detect accelerations of the electronic device 100 in various directions (usually on three axes). A magnitude and a direction of gravity may be detected when the electronic device 100 is still. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance by using the distance sensor 180F to implement quick focusing.

In some embodiments, the distance sensor 180F may be configured to obtain a distance between the electronic device 100 and the user, or further, a distance between the electronic device 100 and a different part (for example, a face) of the user.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, the electronic device 100 may determine that there is an object near the electronic device 100. When insufficient reflected light is detected, the electronic device 100 may determine that there is no object near the electronic device 100.

The ambient light sensor 180L is configured to sense ambient light brightness. The electronic device 100 may adaptively adjust brightness of the display 194 based on the sensed ambient light brightness.

The fingerprint sensor 180H is configured to collect a fingerprint.

The temperature sensor 180J is configured to detect a temperature.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor.

The bone conduction sensor 180M may obtain a vibration signal.

The gravity sensor 180N may be configured to measure acceleration caused by gravity, complete conversion from gravity to an electrical signal, and calculate a tilt angle of the electronic device 100 relative to a horizontal plane.

In some embodiments, the gravity sensor 180N may be configured to calculate a tilt angle of the electronic device 100, so that the electronic device 100 calculates the trigger duration based on the tilt angle. For specific calculation of the trigger duration, refer to subsequent content. Details are not described herein. It may be understood that a sensor used to calculate the tilt angle of the electronic device 100 is not limited in embodiments of this application. For example, in another embodiment of this application, the electronic device 100 may alternatively calculate the tilt angle of the electronic device 100 by using the gyroscope sensor 180B and/or the acceleration sensor 180E.

The button 190 includes a power-on button, a volume button, and the like. The button 190 may be a mechanical button, or may be a touch button. The electronic device 100 may receive a button input, and generate a button signal input related to user settings and function control of the electronic device 100.

In embodiments of this application, the power-on button may also be referred to as a power button. In some embodiments, the touch and hold operation may be an operation that is performed on the power button and that lasts for specific duration, and duration of the touch and hold operation is duration that lasts after the power button is touched. In other words, when the electronic device 100 detects that the duration of the touch and hold operation is greater than the specific duration, the electronic device 100 may enable a corresponding function in response to the operation, for example, a voice detection function.

The motor 191 may generate a vibration prompt. The motor 191 may be configured to provide an incoming call vibration prompt and a touch vibration feedback.

The indicator 192 may be an indicator light, and may be configured to indicate a charging status and a power change, or may be configured to indicate a message, a missed call, a notification, and the like.

The SIM card interface 195 is configured to connect to a SIM card.

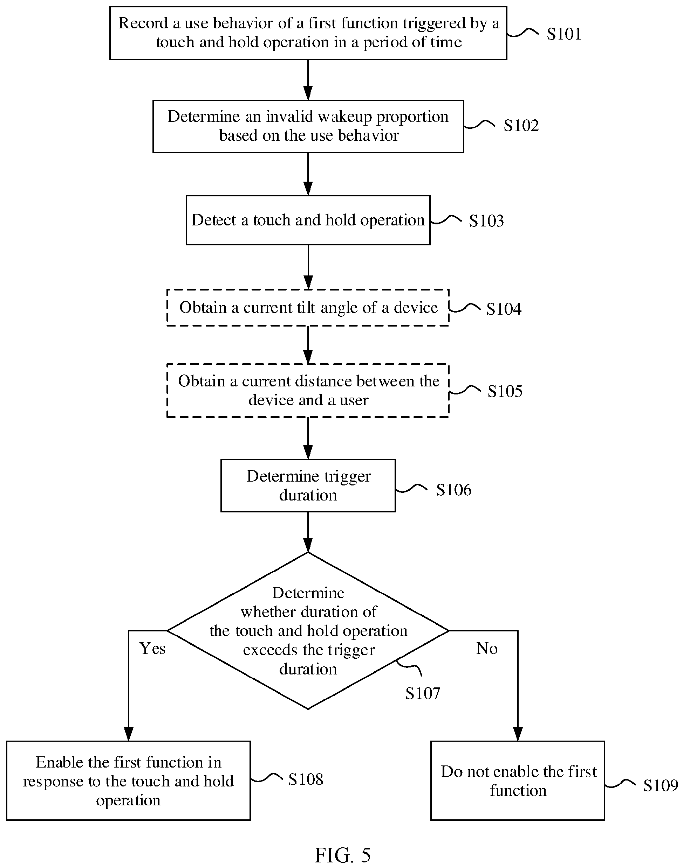

FIG. 5 is a schematic flowchart of a function enabling method according to an embodiment of this application.

As shown in FIG. 5, the method includes the following steps.

Phase 1: Record a behavior

S101: An electronic device 100 records a use behavior of a first function triggered by a touch and hold operation in a period of time.

The touch and hold operation refers to an operation in which a limb part (for example, a finger) of a user, a device (for example, a stylus) carried by the user, or the like stay on the electronic device 100 for specific duration. In addition, the electronic device 100 may trigger to enable the first function only when it is detected that the duration of the touch and hold operation exceeds a threshold.

The touch and hold operation may be a touch and hold operation performed on a physical button of the electronic device 100, an interface element on a user interface, or the like. For details, refer to related descriptions in the application scenarios described above. The first function may be a voice detection function, a search function, a picture recognition function, an NFC function, a photographing function, a recording function, or the like.

Specifically, when the electronic device 100 detects that the duration of the touch and hold operation of the user reaches the specific duration, the electronic device 100 may enable the first function in response to the touch and hold operation.

In some embodiments, the touch and hold operation may be a touch and hold operation performed on a power button of the electronic device 100, and the first function may be a voice detection function. The voice detection function may be used to monitor a voice of the user, and make a corresponding response to the voice output by the user. For specific descriptions of the voice detection function, refer to the foregoing content, and details are not described herein again.

For example, the touch and hold operation may be a touch and hold operation performed on the power button 01 shown in FIG. 1A. When enabling the first function, the electronic device 100 may display the user interface 20 shown in FIG. 1B. The user interface 20 indicates that the electronic device 100 is currently in a state of monitoring the voice of the user, and the electronic device 100 may make a response based on the voice output by the user.

In some other embodiments, the touch and hold operation may be a touch and hold operation performed in a blank area on a desktop of the electronic device 100, and the first function may be a desktop editing function. For details about the desktop editing function, refer to the foregoing content. Details are not described herein again.

For example, the touch and hold operation may be a touch and hold operation shown in FIG. 2A. When enabling the first function, the electronic device 100 may display the user interface 30 shown in FIG. 2B. The user interface 30 is an editing interface for content displayed on the user interface 10.

In some other embodiments, the touch and hold operation may be a touch and hold operation performed on a setting icon, and the first function may be a setting function of a setting option corresponding to the setting icon. For details about the setting function, refer to the foregoing content. Details are not described herein again.

For example, the touch and hold operation may be a touch and hold operation performed on the WLAN setting icon 104a shown in FIG. 3A. When enabling the first function, the electronic device 100 may display the user interface 40 shown in FIG. 3B. The user interface 40 is a detailed setting interface of a WLAN setting option.

It should be understood that the touch and hold operation and the first function are not limited in embodiments of this application.

It should be noted that, in Phase 1, to trigger to enable the first function, the duration of the touch and hold operation may be preset duration, for example, 300 ms. Alternatively, the duration of the touch and hold operation may be duration that is set by the user. Alternatively, if the electronic device 100 previously obtains trigger duration through calculation based on a frequency of using the first function by the user, the duration of the touch and hold operation may be trigger duration obtained through latest calculation. The duration of the touch and hold operation in Phase 1 is not limited in embodiments of this application. For specific descriptions of the trigger duration, refer to related content in subsequent step S106. Details are not described herein.

In embodiments of this application, a plurality of touch and hold operations recorded by the electronic device in Phase 1 may alternatively be referred to as second touch and hold operations.

The use behavior describes whether the electronic device 100 uses the first function after the first function is enabled in response to the touch and hold operation. That the electronic device 100 records the use behavior of the first function triggered by the touch and hold operation means that after the electronic device 100 triggers to enable the first function by using the touch and hold operation, the electronic device 100 determines, based on a status of using the first function by the user, whether the user uses the first function.

The use behavior includes a valid behavior and an invalid behavior. The valid behavior means that the electronic device 100 uses the first function after enabling the first function, and the invalid behavior means that the electronic device 100 does not use the first function after enabling the first function.

Using the first function means that after enabling the first function, the electronic device obtains data (for example, receives a user operation) that is input by the user and that is required by the first function, and the electronic device 100 makes a response (for example, performs a first operation) based on the data. The data required by the first function may include but is not limited to a voice, a text, a picture, information indicating a touch operation of the user, and the like. The response may include but is not limited to: changing display content, outputting a voice, vibration, changing a device status (for example, changing from a standby state to a shut-down state), and the like. The data required by the first function and the response made by the electronic device 100 when the first function is used are not limited in embodiments of this application.

Therefore, after detecting that the touch and hold operation triggers enabling of the first function, the electronic device 100 may record a use behavior corresponding to the touch and hold operation based on whether the user uses the first function.

For example, Table 1 shows use behaviors corresponding to N touch and hold operations recorded by the electronic device 100.

**Table 1**

| User operation | Time | Use behavior |
|---|---|---|
| Touch and hold operation 1 | Time point 1 | Valid behavior |
| Touch and hold operation 2 | Time point 2 | Invalid behavior |
| ... | ... | ... |
| Touch and hold operation N | Time point N | Valid behavior |

It can be learned from Table 1 that the electronic device 100 detects the touch and hold operation 1 at the time point 1, and determines, based on a use status of the user for a first function that is triggered to be enabled by the touch and hold operation 1, that the touch and hold operation 1 is a valid behavior; the electronic device 100 detects the touch and hold operation 2 at the time point 2, and determines, based on a use status of the user for a first function that is triggered to be enabled by the touch and hold operation 2, that the touch and hold operation 2 is an invalid behavior; and the like. The electronic device 100 may continuously record a use behavior of a touch and hold operation, so that the electronic device 100 can determine, based on a specific quantity of use behaviors, a frequency of using the first function by the user.

Specifically, whether the first function is used mainly includes the following three cases:

(1) After enabling the first function, the electronic device 100 detects a user operation, and disables the first function.

In other words, after enabling the first function, the electronic device 100 may disable the first function based on the user operation. The user operation may be a touch operation performed on the electronic device 100, or may be a voice instruction output by the user. The user operation is not limited in embodiments of this application.

In this case, the user directly disables the first function after enabling the first function. Therefore, the first function is not used, so that the use behavior is an invalid behavior.

For example, when the first function is the voice detection function, after the voice detection function is enabled, the electronic device 100 may display the user interface 20 shown in FIG. 1B. The user operation may be a tap operation performed on an area on the user interface 20 other than the voice identifier 201, the keyboard icon 202, and the prompt information 203. In response to the operation, the electronic device 100 may disable the first function, and return to displaying the user interface 10 shown in FIG. 1A.

(2) After enabling the first function, the electronic device 100 automatically disables the first function.

After enabling the first function, the electronic device 100 may automatically disable the first function when a preset condition is met. For example, the preset condition may be that the electronic device 100 receives no user operation within preset duration after enabling the first function. Alternatively, the preset condition may be that the first function enabled by the electronic device 100 conflicts with a currently running function, or the like. The preset condition is not limited in embodiments of this application.

In this case, although the user enables the first function, the user does not further perform an operation on the first function. Therefore, the first function is not used, so that the use behavior is an invalid behavior.

For example, when the first function is the voice detection function, after the voice detection function is enabled, the electronic device 100 may display the user interface 10 shown in FIG. 1B. If no user operation is detected within 5s, the electronic device 100 automatically disables the first function.

(3) After enabling the first function, the electronic device 100 detects data that is input by the user and that is required by the first function, and makes a response based on the data.

In this case, the user enables the first function, performs a further operation on the first function, and obtains a response from the electronic device 100. Therefore, the first function is used, and the use behavior is a valid behavior.

For example, that the first function is the voice detection function is used as an example. After the electronic device 100 enables the voice detection function, the electronic device 100 is in a state of monitoring a voice of the user. If the electronic device 100 detects a voice output by the user and makes a response based on the voice, it indicates that the user uses the voice detection function. For example, when displaying the user interface 10 shown in FIG. 1B, the electronic device 100 may detect a voice instruction "turn on music" output by the user, and the electronic device 100 may open a music application in response to the voice instruction, or further output a voice "music is on" after opening the music application.

In addition, it should be noted that, after the electronic device 100 enables the first function by using the touch and hold operation and before the first function is disabled, a behavior of using the first function by the user a plurality of times is recorded as only one valid behavior. This is because a difference between a valid behavior and an invalid behavior lies in whether the user uses the first function after enabling the first function by using the touch and hold operation. Therefore, in a process of enabling the first function by the user at one time, even if the user uses the first function a plurality of times, the use behavior is considered as only one valid behavior.

It should be understood that whether the first function is used is not limited to the foregoing three cases. This is not limited in embodiments of this application.

Phase 2: Calculate a parameter

S102: The electronic device 100 determines an invalid wakeup proportion based on the use behavior.

The invalid wakeup proportion indicates a frequency of using the first function by the user in a period of time. The electronic device 100 may calculate the invalid wakeup proportion according to Formula 1:

$$c = X/Y \hspace{4cm} \text{Formula 1}$$

c represents an invalid wakeup proportion, X represents a quantity of recorded invalid behaviors in use behaviors recorded in a period of time, and Y represents a quantity of all recorded use behaviors in a period of time.

It can be learned from Formula 1 that the invalid wakeup proportion indicates a proportion of invalid behaviors in all obtained use behaviors in a period of time. A larger value of the invalid wakeup proportion indicates a lower frequency of using the first function by the user, and enabling the first function by the user in this period of time may be triggered by an accidental touch. A smaller value of the invalid wakeup proportion indicates a higher frequency of using the first function by the user. In other words, the user may frequently enable the first function by using a touch and hold operation and use the first function.

It should be understood that, in addition to calculating the invalid wakeup proportion, the electronic device 100 may further calculate a valid wakeup proportion, that is, a proportion of valid behaviors in all obtained use behaviors. The valid wakeup proportion may also indicate a frequency of using the first function by the user in a period of time. It should be understood that, in embodiments of this application, the duration of the touch and hold operation is dynamically adjusted by analyzing the use behavior of the user on the first function. Therefore, parameters calculated by the electronic device 100 are not limited to the invalid wakeup proportion and the valid wakeup proportion. Based on the use behavior of the user, all parameters that are obtained through calculation and that can indicate a frequency of using the first function by the user after the user enables the first function by performing the touch and hold operation fall within the protection scope of embodiments of this application. A parameter calculated by the electronic device 100 is not limited in embodiments of this application.

The electronic device 100 may trigger to determine the invalid wakeup proportion when one or more of the following conditions are met:

(1) After the first function is disabled:
The electronic device 100 may disable the first function in the following two cases:

(a) The electronic device 100 disables the first function based on a user operation.
Specifically, the electronic device 100 may detect a user operation, and disable the first function in response to the operation.
(b) The electronic device 100 automatically disables the first function.

The electronic device 100 may automatically disable the first function after no user operation is detected within preset time, or automatically disable the first function when the first function conflicts with running of another application or another function.

In other words, after detecting that the first function is disabled, the electronic device 100 may trigger to determine the invalid wakeup proportion.

In this way, the electronic device 100 may trigger to update the invalid wakeup proportion each time the first function is disabled. The time at which the electronic device 100 triggers to disable the first function is not limited in embodiments of this application.

(2) An adjustment interval reaches preset time:
Specifically, the electronic device 100 may determine whether a time interval between current time and time when the trigger duration or the invalid wakeup proportion is calculated last time is greater than preset time (for example, 7 days). If the time interval is greater than the preset time, the electronic device 100 may trigger to determine the invalid wakeup proportion.

In this way, the electronic device 100 may periodically update the invalid wakeup proportion at an interval of a period of time.

(3) A quantity of times of recorded use behaviors reaches a preset quantity:
Specifically, the electronic device 100 may determine whether a quantity of times of recorded use behaviors is greater than a threshold (for example, five times) after the invalid wakeup proportion is calculated last time. If the quantity of times of recorded use behaviors is greater than the threshold, the electronic device 100 may trigger to determine the invalid wakeup proportion.

In this way, the electronic device 100 may update the invalid wakeup proportion when the quantity of times of recorded use behaviors reaches the preset quantity.

(4) User triggering:

Specifically, the electronic device 100 may trigger to update the invalid wakeup proportion based on a user operation. In this way, the user may customize update time of the invalid wakeup proportion, so that operability of the user is enhanced.

It should be understood that the foregoing one or more conditions may also be referred to as a first condition. It should be noted that the electronic device 100 may trigger to determine the invalid wakeup proportion when the foregoing plurality of conditions are met simultaneously. For example, after disabling the first function, the electronic device 100 may determine whether the adjustment interval is greater than the preset time. If the adjustment interval is greater than the preset time, the electronic device 100 further determines whether the quantity of the recorded use behaviors is greater than the preset quantity. If the quantity of the recorded use behaviors is greater than the preset quantity, the electronic device 100 triggers to determine the invalid wakeup proportion. The time at which the electronic device 100 triggers to determine the invalid wakeup proportion is not limited in embodiments of this application.

The use behavior used when the electronic device 100 determines the invalid wakeup proportion may include the following three cases:

(1) All recorded use behaviors:

In other words, the electronic device 100 may obtain all use behaviors recorded by the electronic device 100, and determine the invalid wakeup proportion based on these use behaviors.

In this way, the electronic device 100 may calculate the invalid wakeup proportion based on all use behaviors of the user, to avoid missing a use behavior of the user, and ensure that the electronic device can dynamically adjust the trigger duration with reference to the using of the first function by the user in all time periods after the first function is enabled by using the touch and hold operation.

(2) Use behavior recorded after previous determining of the invalid wakeup proportion:

In other words, the electronic device 100 may obtain a latest recorded use behavior of the electronic device 100 after the previous determining of the invalid wakeup proportion, and determine the invalid wakeup proportion based on the use behavior.

In this way, each time the electronic device 100 calculates the invalid wakeup proportion, the electronic device 100 may determine the invalid wakeup proportion based on a latest use behavior of the user, so that the electronic device 100 can dynamically adjust the trigger duration based on a change of the frequency of using the first function by the user. This prevents a very early use of the first function by the user from affecting a latest calculation result of the invalid wakeup proportion. In addition, the electronic device 100 may calculate the invalid wakeup proportion based on only a part of the use behaviors, so that a parameter operation speed is accelerated.

(3) Preset quantity of usage behaviors:

In other words, the electronic device 100 may obtain a preset quantity of use behaviors, and calculate the invalid wakeup proportion based on these use behaviors.

The preset quantity of use behaviors may be recently recorded use behaviors, or may be randomly selected use behaviors. This is not limited in embodiments of this application. For example, the preset quantity may be 10. The preset quantity is not limited in embodiments of this application. In this way, the electronic device 100 may calculate the invalid wakeup proportion based on a fixed quantity of use behaviors each time, to stabilize a parameter operation speed.

Phase 3: Enable a function

S103: The electronic device 100 detects a touch and hold operation.

The touch and hold operation in step S103 and the touch and hold operation mentioned in step S101 are performed on a same object. A difference lies in that duration required by the touch and hold operation in step S103 to trigger to enable the first function may be different from duration required by the touch and hold operation in step S101 to trigger to enable the first function. The duration required by the touch and hold operation in S103 is trigger duration calculated based on the invalid wakeup proportion determined in step S102. For a specific description of the trigger duration, refer to the description of subsequent step S106. Details are not described herein. In embodiments of this application, the touch and hold operation received by the electronic device 100 in Phase 3 may alternatively be referred to as a first touch and hold operation.

For a specific description of the touch and hold operation, refer to the description of step S101. Details are not described herein again.

In some embodiments, the electronic device 100 may detect a touch and hold operation performed by the user on a power button of the electronic device 100. For example, the touch and hold operation may be a touch and hold operation performed on the power button 01 shown in FIG. 1A.

In some other embodiments, the electronic device 100 may detect a touch and hold operation performed by the user on a desktop. For example, the touch and hold operation may be a touch and hold operation performed in a blank area on the desktop shown in FIG. 2A.

In some other embodiments, the electronic device 100 may detect a touch and hold operation performed by the user on a setting icon. For example, the touch and hold operation may be a touch and hold operation performed on the WLAN setting icon 104a shown in FIG. 3A.

S104: The electronic device 100 obtains a current tilt angle of the device.

The tilt angle of the device may be an angle between a plane on which a display of the electronic device 100 is located and a horizontal plane, or may be an angle between a plane on which the display of the electronic device 100 is located and a vertical plane. The tilt angle represents a probability of using the first function by the user. The tilt angle of the device is not limited in embodiments of this application.

For example, the electronic device 100 may obtain the tilt angle of the electronic device 100 by using the gravity sensor 180N. The electronic device 100 may calculate the trigger duration based on the tilt angle. This is because the tilt angle of the device is related to whether the user uses the first function. The electronic device 100 may analyze, based on the tilt angle of the device, whether the user currently has an intention of using the first function, and further determine the trigger duration. The gravity sensor 180N may alternatively be referred to as a first sensor, and the tilt angle of the device may alternatively be referred to as first information.

For example, when the first function is a photographing function, and the electronic device 100 is a mobile phone, the user can normally complete a selfie only when the user holds the mobile phone and reduces an angle between a plane on which a display of the mobile phone is located and a plane on which a face of the user is located. Therefore, the electronic device 100 may analyze, based on the current tilt angle of the device, whether the user has an intention of using the photographing function. If the user has an intention of using the photographing function, the electronic device 100 may shorten the trigger duration, to ensure that the user can enable the photographing function as soon as possible. Otherwise, the electronic device 100 may prolong the trigger duration to prevent the user from enabling the photographing function due to an accidental touch.

It should be understood that step S104 is an optional step. In addition, the electronic device 100 may further obtain the current tilt angle of the device in another manner. This is not limited in embodiments of this application.

S105: The electronic device 100 obtains a current distance between the device and the user.

The distance between the device and the user represents a probability of using the first function by the user. For example, the electronic device 100 may obtain the current distance between the electronic device 100 and the user by using the distance sensor 180F. The electronic device 100 may calculate the trigger duration based on the distance. This is because the distance between the device and the user is related to whether the user uses the first function. The electronic device 100 may analyze, based on the distance between the device and the user, whether the user currently has an intention of using the first function, and further determine the trigger duration. The distance sensor 180F may alternatively be referred to as a first sensor, and the distance between the device and the user may alternatively be referred to as first information.

For example, the first function is a voice detection function. After the user enables the voice detection function, if the user wants to use the voice detection function, the user approaches a microphone of the electronic device 100, so that the electronic device 100 can correctly collect a voice output by the user. Alternatively, to clearly view content displayed on the electronic device 100 in a process of using the voice detection function, the user approaches the display of the electronic device 100. Therefore, a shorter distance between the device and the user indicates a greater intention of the user to use the first function. The electronic device 100 may shorten the trigger duration to ensure that the user enables the voice detection function as soon as possible. A longer distance between the device and the user indicates a smaller intention of the user to use the first function. The electronic device 100 may prolong the trigger duration, to reduce a probability that the user mistakenly enables the voice detection function.

In some embodiments, the distance between the device and the user may be further divided into distances between the electronic device 100 and different parts of the user. For example, the distance between the device and the user may be a distance between the electronic device 100 and a part of the user, such as a face, a limb, a torso, an ear, and the like.

This is because when the user uses different functions of the electronic device 100, different parts of the user may approach or move away from the electronic device 100. For example, when the first function is a video playback function, the face of the user generally keeps a specific distance from the electronic device 100, so that the user can clearly see content displayed on the display of the electronic device 100. When the first function is a call function, the user generally places the ear close to the electronic device 100, so that the user can clearly hear a voice output by the electronic device 100. Therefore, the electronic device 100 obtains a current distance between the device and a different part of the user, or a current distance between the device and a specific part of the user, so that whether the user has an intention of using the first function can be accurately analyzed, accurate trigger duration can be obtained, and user experience can be improved.

It should be understood that step S105 is an optional step. In addition, the electronic device 100 may further obtain the distance between the device and the user in another manner. This is not limited in embodiments of this application.

S106: The electronic device 100 determines the trigger duration.

The trigger duration is duration of the touch and hold operation. After detecting the touch and hold operation of the user, the electronic device 100 may start timing, and stop timing until the user cancels the touch and hold operation. When the electronic device 100 detects that timing duration is greater than the trigger duration, the electronic device 100 may enable the first function in response to the touch and hold operation.

The electronic device 100 may calculate the trigger duration based on one or more of the tilt angle of the device, the distance between the device and the user, and the invalid wakeup proportion. In embodiments of this application, the trigger duration may also be referred to as first duration.

In some embodiments, the electronic device 100 may calculate the trigger duration based on the invalid wakeup proportion. Specifically, the electronic device 100 may calculate the trigger duration according to Formula 2:

$$T = \begin{cases} T_0 + M \ (c \geq c1) \\ T_0 - M \ (c < c1) \end{cases} \qquad \text{Formula 2}$$

T represents the trigger duration, $T_0$ represents initial duration, M (M>0) represents fluctuation duration, and c indicates the invalid wakeup proportion.

It can be learned from Formula 2 that, when the invalid wakeup proportion is greater than or equal to a threshold (c1), the trigger duration is equal to the initial duration plus the fluctuation duration. When the invalid wakeup proportion is less than a threshold (c1), the trigger duration is equal to the initial duration minus the fluctuation duration. In other words, when the user uses the first function at a low frequency, the electronic device 100 may appropriately prolong the duration of the touch and hold operation, to prevent the user from enabling the first function due to an accidental touch. When the user uses the first function at a high frequency, the electronic device 100 may appropriately shorten the duration of the touch and hold operation, to avoid that the user waits for excessively long time when the user enables the first function by using the touch and hold operation.

In other words, when the use frequency is located in different ranges, different trigger duration values may be correspondingly obtained. When the frequency of using the first function by the user is greater than a threshold (for example, a first value), the trigger duration may correspondingly be duration A (for example, a second value). When the frequency of using the first function by the user is less than a threshold (for example, a third value), the trigger duration may be duration B (for example, a fourth value). The duration A may be less than the duration B. In this way, from a macro perspective, a higher use frequency indicates shorter trigger duration, and a lower use frequency indicates longer trigger duration. In addition, trigger duration obtained through calculation may be the same under different use frequencies in a range.

For example, it is assumed that the touch and hold operation is a touch and hold operation performed on the power button, the first function is a voice detection function, $T_0$=300 ms, M=50 ms, and c1=1/3. If the electronic device 100 obtains through calculation that the invalid wakeup proportion is 1/2, the electronic device 100 calculates the trigger duration T=300 ms+50 ms=350 ms. In this case, when detecting that the press and hold operation performed by the user on the power button exceeds 350 ms, the electronic device 100 enables the first function.

It should be understood that the electronic device 100 may further set a plurality of thresholds, for example, c1, c2, and c3. The electronic device 100 may set a plurality of numerical ranges for the invalid wakeup proportion, for example, four numerical intervals: c<c1, c1<c<c2, c2<c<c3, and c>c3. Different numerical ranges may correspond to different trigger duration. The electronic device 100 may determine, based on a numerical range in which the invalid wakeup proportion finally falls, trigger duration corresponding to the invalid wakeup proportion. Alternatively, the trigger duration may be positively correlated with the frequency of using the first function by the user. A higher frequency of using the first function indicates shorter trigger duration, and a lower frequency of using the first function indicates longer trigger duration. In this way, trigger duration obtained through calculation is different when use frequencies are different. In addition, in addition to calculating the trigger duration based on the use frequency, the electronic device 100 may further calculate the trigger duration based on a quantity of times of using the first function by the user after the user enables the first function. For example, the trigger duration is calculated based on a quantity of times of using the first function by the user when the user enables the first function by using the touch and hold operation for 10 times.

In addition, it should be noted that, when the electronic device 100 calculates the trigger duration only based on the invalid wakeup proportion, the electronic device 100 may not need to perform step S104 and step S105, and step S106 may be performed after S102 and before S103. In other words, after obtaining the invalid wakeup proportion and before detecting the touch and hold operation, the electronic device 100 may calculate the trigger duration. In addition, the electronic device 100 may periodically update the trigger duration, trigger to update the trigger duration based on a user operation, and the like.

In some other embodiments, the electronic device 100 may calculate the trigger duration based on the invalid wakeup proportion, the tilt angle of the device, and the distance between the device and the user. Specifically, the electronic device 100 may calculate the trigger duration according to Formula 3:

$$T=T_0+X1*a+X2*b+X3*c \qquad\qquad \text{Formula 3}$$

T represents the trigger duration, $T_0$ represents initial duration, for example, $T_0$=300 ms, a represents the tilt angle of the device, b represents the distance between the device and the user, c represents the invalid wakeup proportion, and X1, X2, and X3 indicate weights of a, b, and c respectively.

It can be learned from Formula 3 that the trigger duration is equal to a sum of products of the tilt angle of the device, the distance between the device and the user, and the invalid wakeup ratio multiplied by weights of the tilt angle of the device, the distance between the device and the user, and the invalid wakeup proportion respectively. In this way, the electronic device 100 may analyze, from a plurality of angles, the intention of the user to use the first function with reference to a plurality of factors, to obtain accurate and appropriate trigger duration through calculation.

In addition, X1, X2, and X3 may be data prestored in the electronic device 100, and X1, X2, and X3 respectively indicate degrees of impact of factors a, b, and c on the trigger duration. X1, X2, and X3 may be obtained by development or operation and maintenance personnel based on big data analysis. In addition, the electronic device 100 may dynamically update X1, X2, and X3, so that the electronic device 100 updates, in real time based on a habit of the public of using a touch and hold operation, degrees of impact of different factors on the trigger duration. In addition, values of X1, X2, and X3 may be equal to 0 or not equal to 0. When a value is 0, it indicates that a factor corresponding to the value does not affect the trigger duration, and the factor is not considered when the trigger duration is calculated. Values of X1, X2, and X3 are not limited in embodiments of this application.

It should be understood that X1, X2, and X3 respectively indicate degrees of impact of factors a, b, and c on the trigger duration. The X2 is used as an example. When X2>0, it indicates that the distance between the device and the user is positively correlated with a value of the trigger duration. If X1<0, it indicates that the distance between the device and the user is negatively correlated with the trigger duration. However, in some embodiments, the distance between the device and the user may alternatively be in a specific range, and is positively correlated with the value of the trigger duration, or may be in another range, and is negatively correlated with the value of the trigger duration. For example, if the first function is a photographing function, the user may use the photographing function to take a selfie only when the distance between the electronic device 100 and the human face of the user is within a specific range, because the entire face may not be photographed if the distance is too close, and details of the face may not be photographed if the distance is too far. Therefore, when calculating the trigger duration, the electronic device 100 may further dynamically adjust a weight of each factor with reference to a value range of each factor.

It should be noted that, in addition to calculating the trigger duration based on the tilt angle, the distance between the device and the user, and the invalid wakeup proportion mentioned above, the electronic device 100 may further calculate the trigger duration with reference to data collected by other hardware (for example, another sensor) or another factor, for example, ambient brightness, screen-on status of the display, battery level, network signal strength, and screen-off status of the display. This is not limited in embodiments of this application.

In addition, because the electronic device 100 may trigger enabling of a corresponding function by detecting a touch and hold operation, the electronic device 100 may further trigger to enable different functions based on different duration of the touch and hold operation. For example, when the electronic device 100 detects that the duration of the touch and hold operation falls within a first range, the electronic device 100 may trigger to enable a first function. When the electronic device 100 detects that the duration of the touch and hold operation falls within a second range, the electronic device 100 may trigger to enable a second function. For example, when the touch and hold operation is a touch and hold operation performed on the power button, when the user touches and holds the power button for 0.5s, the voice detection function may be triggered, and when the user touches and holds the power button for 3s, shutdown or restart may be triggered. In this case, the electronic device 100 may control a value of the calculated trigger duration, and set a maximum limit value and/or a minimum limit value of the trigger duration, to avoid confusion of enabling different functions, and avoid that the calculated trigger duration is excessively long or excessively short, thereby affecting user experience of actually using the touch and hold operation.

In general, the electronic device 100 may calculate the trigger duration by using the frequency of using the first function by the user. Further, in a process of calculating the trigger duration, the electronic device 100 may further combine another factor, for example, the tilt angle of the device, and/or the distance between the device and the user, to assist in calculating the trigger duration.

S107: The electronic device 100 determines whether the duration of the touch and hold operation exceeds the trigger duration.

When the electronic device 100 determines that the duration of the touch and hold operation exceeds or reaches the trigger duration, step S108 is performed to enable the first function. Otherwise, step S109 is performed to skip enabling the first function. Alternatively, after the duration of the touch and hold operation reaches the trigger duration, the first function is enabled. Otherwise, the first function is not enabled.

There may be the following two cases in which the electronic device 100 determines whether the duration of the touch and hold operation exceeds the trigger duration.

(1) The electronic device 100 determines, in a process of performing the touch and hold operation, whether the duration of the touch and hold operation exceeds the trigger duration.

In this case, the electronic device 100 may perform step S108, that is, enable the first function, when the touch and hold operation is still performed on the electronic device 100. In this way, the user may end the touch and hold operation after observing that the electronic device 100 enables the first function. In other words, the user may not need to spend too much thought on the duration of the touch and hold operation, but directly determine, after triggering the touch and hold operation and based on a response status of the electronic device 100 to the operation, when to end the touch and hold operation, and control the electronic device 100 to enable a function required by the user.

(2) After the touch and hold operation ends, the electronic device 100 determines whether the duration of the touch and hold operation exceeds the trigger duration.

In this case, after the touch and hold operation ends, the electronic device 100 performs step S108, that is, enables the first function. In this way, the user may control the electronic device 100 to trigger to enable the first function only after the touch and hold operation ends, and view an operation performed when the electronic device 100 enables the first function. That is, the user may control the electronic device 100 to enable a function required by the user based on an estimation of the user on the duration of the touch and hold operation.

S108: The electronic device 100 enables the first function in response to the touch and hold operation.

Specifically, after the electronic device 100 determines that the duration of the touch and hold operation exceeds or reaches the trigger duration, the electronic device 100 may enable the first function in response to the touch and hold operation. Enabling the first function may include but is not limited to one or more of the following: displaying a user interface related to the first function, outputting a voice, vibrating, changing a device status, and the like.

For example, when the electronic device 100 enables the first function, the user interface 20 shown in FIG. 1B may be displayed. The voice identifier 201, the keyboard icon 202, and the prompt information 203 on the user interface 20 may indicate that the user already enables the voice detection function currently. The electronic device 100 may monitor a voice of the user and make a response to the voice of the user.

For example, when the electronic device 100 enables the first function, the user interface 30 shown in FIG. 2B may be displayed. The user interface 30 is the editing interface displayed after the electronic device 100 enables the desktop editing function.

For example, when the electronic device 100 enables the first function, the user interface 40 shown in FIG. 3B may be displayed. The user interface 40 is the setting interface displayed after the electronic device 100 enables the setting function.

In addition, in a case in which the electronic device 100 determines whether the duration of the touch and hold operation exceeds the trigger duration in the process of performing the touch and hold operation mentioned in step S107, if the electronic device 100 is set to enable different functions in different trigger duration, after the electronic device 100 enables the first function, if the touch and hold operation continues for specific duration (for example, third duration), the electronic device 100 may disable the first function and enable a second function.

S109: The electronic device 100 does not enable the first function.

When the duration of the touch and hold operation does not exceed or does not reach the trigger duration, the electronic device 100 does not enable the first function. It can be learned that the electronic device 100 enables the first function only when the duration of the touch and hold operation exceeds the specific time. Otherwise, the electronic device 100 does not enable the first function. This can avoid a case in which the electronic device 100 mistakenly enables the first function when the user mistakenly triggers the touch and hold operation, and consequently experience of the user in the touch and hold operation is affected, thereby reducing a probability of an accidental touch of the user.

In general, according to the function enabling method provided in embodiments of this application, the trigger duration of the touch and hold operation may be dynamically adjusted based on the frequency of using the first function after the user enables the first function by using the touch and hold operation. For example, at a first moment, the electronic device detects a touch and hold operation (for example, a first touch and hold operation), and enables a first function after the touch and hold operation lasts for first duration. At a second moment (before or after the first moment), the electronic device detects a touch and hold operation (for example, a second touch and hold operation), and enables the first function after the touch and hold operation lasts for second duration. The second duration may be different from the first duration. In this way, the user may no longer trigger the touch and hold operation based on fixed duration. Based on habits of using an application or a function by different users, duration suitable for the users is customized for the users, so that user experience of the touch and hold operation is improved.

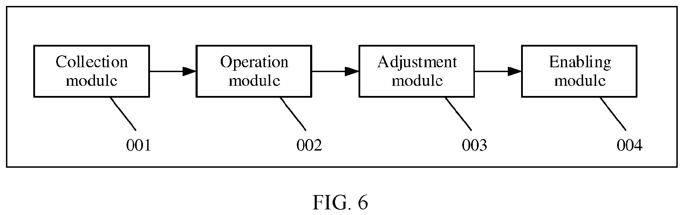

FIG. 6 is a diagram of a structure of function enabling apparatus according to an embodiment of this application.

As shown in FIG. 6, the function enabling apparatus may include a collection module 001, an operation module 002, an adjustment module 003, and an enabling module 004.

Specifically, the collection module 001 may be configured to record and obtain a behavior of using a first function after a user enables the first function by using a touch and hold operation, and send the use behavior to the operation module 002.

The operation module 002 may be configured to calculate an invalid wakeup proportion based on the use behavior of the user, and send the invalid wakeup proportion to the adjustment module 003. For details about the invalid wakeup proportion, refer to the foregoing content. Details are not described herein again.

The adjustment module 003 may be configured to calculate trigger duration of the touch and hold operation based on the invalid wakeup proportion. Alternatively, the adjustment module 003 may further calculate the trigger duration with reference to another factor, for example, a tilt angle of the device and a distance between the device and the user. The adjustment module 003 may send the trigger duration to the enabling module 004.

The enabling module 004 may be configured to detect a touch and hold operation of the user, and enable the first function when duration of the touch and hold operation reaches the trigger duration.

It should be understood that, when the function enabling apparatus is the electronic device 100 mentioned above, a function of recording and obtaining a use behavior in the collection module 001 may be implemented by the processor 110 in the electronic device 100, and a use behavior recorded by the collection module 001 may be stored by the internal memory 121 in the electronic device 100. Specific functions of the operation module 002 and the adjustment module 003 may be implemented by the processor 110 in the electronic device 100. A function of detecting a user operation in the enabling module 004 is implemented by the button 190 or the touch sensor 180K of the electronic device 100. A change on a user interface after the first function is enabled in the enabling module 004 may be implemented by the display 194 of the electronic device 100. In addition, for a part not mentioned in the function enabling apparatus, refer to FIG. 1A, FIG. 1B, FIG. 2A, FIG. 2B, FIG. 3A, FIG. 3B, FIG. 4, FIG. 5, and related descriptions thereof. Details are not described herein again.

It should be understood that the steps in the foregoing method embodiments may be completed by using an integrated logic circuit of hardware in the processor or an instruction in a form of software. The steps of the method disclosed with reference to embodiments of this application may be directly performed by a hardware processor, or may be performed through a combination of hardware in the processor and a software module.

This application further provides an electronic device. The electronic device may include a memory and a processor. The memory may be configured to store a computer program. The processor may be configured to invoke the computer program in the memory, so that the electronic device performs the method performed by the electronic device 100 according to any one of the foregoing embodiments.

This application further provides a chip system. The chip system includes at least one processor, configured to implement functions in the method performed by the electronic device 100 according to any one of the foregoing embodiments.

In a possible design, the chip system further includes a memory, the memory is configured to store program instructions and data, and the memory is located inside or outside the processor.

The chip system may include a chip, or may include a chip and another discrete component.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a microcontroller unit (micro controller unit, MCU), a programmable logic device (programmable logic device, PLD), or another integrated chip.

This application further provides a computer program product. The computer program product includes a computer program (also referred to as code or instructions). When the computer program is run, a computer is enabled to perform the method performed by the electronic device 100 according to any one of the foregoing embodiments.

This application further provides a computer-readable storage medium. The computer-readable storage medium stores a computer program (which may also be referred to as code or instructions). When the computer program is run, a computer is enabled to perform the method performed by the electronic device 100 according to any one of the foregoing embodiments.

It should be understood that the processor in embodiments of this application may be an integrated circuit chip, and has a signal processing capability. In an implementation process, steps in the foregoing method embodiments may be completed by using an integrated logic circuit of hardware in the processor or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor may implement or execute the methods, steps, and logical block diagrams disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps of the foregoing method in combination with hardware of the processor.

In addition, an embodiment of this application further provides an apparatus. The apparatus may be specifically a component or a module, and the apparatus may include one or more processors and a memory that are connected. The memory is configured to store a computer program. When the computer program is executed by the one or more processors, the apparatus is enabled to perform the methods according to the foregoing method embodiments.

The apparatus, the computer-readable storage medium, the computer program product, or the chip provided in embodiments of this application are all configured to perform the corresponding method provided above. Therefore, for beneficial effects that can be achieved, refer to beneficial effects in the corresponding method provided above, and details are not described herein again.

The implementations of this application may be randomly combined to achieve different technical effects.

All or some of the foregoing embodiments may be implemented by using software, hardware, firmware, or any combination thereof. When software is used to implement the embodiments, the embodiments may be implemented entirely or partially in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

A person of ordinary skill in the art may understand that all or some of the procedures of the methods in embodiments may be implemented by a computer program instructing related hardware. The program may be stored in a computer-readable storage medium. When the program is run, the procedures of the methods in embodiments are performed. The foregoing storage medium includes any medium that can store program code, such as a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, or improvement made according to the disclosure of the present invention shall fall within the disclosure of the present invention.

**Claims**

1. A function enabling method, wherein the method comprises:

   detecting, by an electronic device (101), a first touch and hold operation (S103); and
   enabling (S108), by the electronic device, a first function after the first touch and hold operation lasts for first duration (S107), wherein
   the first duration is determined based on a frequency or a quantity of times of using the first function by the electronic device after the electronic device enables the first function by using a second touch and hold operation a plurality of times.

2. The method according to claim 1, wherein when the frequency is greater than a first value, the first duration is a second value, or when the frequency is less than a third value, the first duration is a fourth value, wherein the second value is less than the fourth value; or
   a higher frequency indicates shorter first duration, and a lower frequency indicates longer first duration.

3. The method according to claim 1 or 2, wherein
   the first touch and hold operation comprises a touch and hold operation performed on a physical button or an interface element of the electronic device, the first function comprises a voice assistant, and the voice assistant is configured to monitor a voice of a user, and make a response based on the voice.

4. The method according to any one of claims 1 to 3, wherein before the detecting, by an electronic device, a first touch and hold operation, the method further comprises:

   detecting, by the electronic device, a third touch and hold operation; and
   enabling, by the electronic device, the first function after the third touch and hold operation lasts for second duration, wherein

the second duration is different from the first duration.

5. The method according to any one of claims 1 to 4, wherein after the detecting, by an electronic device, a first touch and hold operation, the method further comprises:

collecting, by the electronic device, first information by using a first sensor, wherein the first information represents a probability that the user uses the first function in the electronic device, wherein the first duration is specifically determined based on the first information and the frequency of using the first function by the electronic device after the electronic device enables the first function by using the second touch and hold operation a plurality of times.

6. The method according to claim 5, wherein

the first sensor comprises a gravity sensor, and the first information comprises a tilt angle of the electronic device; and/or the first sensor comprises a distance sensor, and the first information comprises a distance between the electronic device and the user.

7. The method according to any one of claims 1 to 6, wherein after the enabling, by the electronic device, a first function in response to the first touch and hold operation, the method further comprises: after the first touch and hold operation continues for third duration, disabling, by the electronic device, the first function and enabling a second function.

8. The method according to any one of claims 1 to 7, wherein before the detecting, by an electronic device, a first touch and hold operation, the method further comprises:

when a first condition is met, determining, by the electronic device, the frequency of using the first function by the electronic device after the first function is enabled by using the second touch and hold operation a plurality of times, wherein the first condition comprises but is not limited to one or more of the following: the electronic device disables the first function, preset time is reached, or the quantity of times of enabling the first function by the electronic device by using the second touch and hold operation reaches a preset quantity of times.

9. The method according to any one of claims 1 to 8, wherein the plurality of second touch and hold operations are a part of or all touch and hold operations that are used to enable the first function and that are detected before the electronic device detects the first touch and hold operation.

10. The method according to any one of claims 1 to 9, wherein that the electronic device uses the first function comprises: the electronic device receives a user operation, and performs a first operation on the first function.

11. An electronic device, comprising a memory, one or more processors, and one or more programs, wherein when the one or more processors execute the one or more programs, the electronic device is enabled to perform the method according to any one of claims 1 to 10.

12. A computer-readable storage medium, comprising instructions, wherein when the instructions are run on an electronic device, the electronic device is enabled to perform the method according to any one of claims 1 to 10.

13. A computer program product, wherein when the computer program product runs on a computer, the computer is enabled to perform the method according to any one of claims 1 to 10.

**Patentansprüche**

1. Funktionsaktivierungsverfahren, wobei das Verfahren Folgendes umfasst:

Detektieren, durch eine elektronische Vorrichtung (101), eines ersten Berührungs- und Haltevorgangs (S103); und Aktivieren (S108), durch die elektronische Vorrichtung, einer ersten Funktion, nachdem der erste Berührungs- und Haltevorgang für eine erste Dauer (S107) angedauert hat, wobei
die erste Dauer basierend auf einer Häufigkeit oder einer Anzahl von Malen eines Verwendens der ersten Funktion durch die elektronische Vorrichtung bestimmt wird, nachdem die elektronische Vorrichtung die erste Funktion unter Verwendung eines zweiten Berührungs- und Haltevorgangs für eine Vielzahl von Malen aktiviert hat.

2. Verfahren nach Anspruch 1, wobei, wenn die Häufigkeit größer als ein erster Wert ist, die erste Dauer ein zweiter Wert ist oder, wenn die Häufigkeit kleiner als ein dritter Wert ist, die erste Dauer ein vierter Wert ist, wobei der zweite Wert kleiner als der vierte Wert ist; oder
eine höhere Häufigkeit eine kürzere erste Dauer anzeigt und eine niedrigere Häufigkeit eine längere erste Dauer anzeigt.

3. Verfahren nach Anspruch 1 oder 2, wobei
der erste Berührungs- und Haltevorgang einen Berührungs- und Haltevorgang, der an einer physischen Taste oder einem Schnittstellenelement der elektronischen Vorrichtung durchgeführt wird, umfasst, die erste Funktion einen Sprachassistenten umfasst und der Sprachassistent dazu konfiguriert ist, die Stimme eines Benutzers zu überwachen und basierend auf der Stimme eine Antwort zu geben.

4. Verfahren nach einem der Ansprüche 1 bis 3, wobei das Verfahren vor dem Detektieren, durch eine elektronische Vorrichtung, eines Berührungs- und Haltevorgangs ferner Folgendes umfasst:

Detektieren, durch die elektronische Vorrichtung, eines dritten Berührungs- und Haltevorgangs; und
Aktivieren, durch die elektronische Vorrichtung, der ersten Funktion, nachdem der dritte Berührungs- und Haltevorgang für eine zweite Dauer angedauert hat, wobei
sich die zweite Dauer von der ersten Dauer unterscheidet.

5. Verfahren nach einem der Ansprüche 1 bis 4, wobei das Verfahren nach dem Detektieren, durch eine elektronische Vorrichtung, eines Berührungs- und Haltevorgangs ferner Folgendes umfasst:

Sammeln, durch die elektronische Vorrichtung, erster Informationen unter Verwendung eines ersten Sensors, wobei die ersten Informationen eine Wahrscheinlichkeit, dass der Benutzer die erste Funktion in der elektronischen Vorrichtung verwendet, darstellen, wobei
die erste Dauer insbesondere basierend auf den ersten Informationen und der Häufigkeit des Verwendens der ersten Funktion durch die elektronische Vorrichtung bestimmt wird, nachdem die elektronische Vorrichtung die erste Funktion unter Verwendung des zweiten Berührungs- und Haltevorgangs für eine Vielzahl von Malen aktiviert hat.

6. Verfahren nach Anspruch 5, wobei

der erste Sensor einen Schwerkraftsensor umfasst und die ersten Informationen einen Neigungswinkel der elektronischen Vorrichtung umfassen; und/oder
der erste Sensor einen Abstandssensor umfasst und die ersten Informationen einen Abstand zwischen der elektronischen Vorrichtung und dem Benutzer umfassen.

7. Verfahren nach einem der Ansprüche 1 bis 6, wobei das Verfahren nach dem Aktivieren, durch die elektronische Vorrichtung, einer ersten Funktion als Reaktion auf den ersten Berührungs- und Haltevorgang ferner Folgendes umfasst:
nachdem der erste Berührungs- und Haltevorgang für eine dritte Dauer fortgesetzt wurde, Deaktivieren, durch die elektronische Vorrichtung, der ersten Funktion und Aktivieren einer zweiten Funktion.

8. Verfahren nach einem der Ansprüche 1 bis 7, wobei das Verfahren vor dem Detektieren, durch eine elektronische Vorrichtung, eines Berührungs- und Haltevorgangs ferner Folgendes umfasst:
wenn eine erste Bedingung erfüllt ist, Bestimmen, durch die elektronische Vorrichtung, der Häufigkeit des Verwendens der ersten Funktion durch die elektronische Vorrichtung, nachdem die erste Funktion unter Verwendung des zweiten Berührungs- und Haltevorgangs für eine Vielzahl von Malen aktiviert wurde, wobei die erste Bedingung unter anderem eine oder mehrere der Folgenden umfasst: die elektronische Vorrichtung deaktiviert die erste Funktion, eine voreingestellte Zeit ist erreicht oder die Anzahl von Malen des Aktivierens der ersten Funktion durch die elektronische Vorrichtung unter Verwendung des zweiten Berührungs- und Haltevorgangs erreicht eine voreingestellte Anzahl von Malen.

9. Verfahren nach einem der Ansprüche 1 bis 8, wobei die Vielzahl von zweiten Berührungs- und Haltevorgängen ein Teil von oder alle Berührungs- und Haltevorgänge sind, die dazu verwendet werden, die erste Funktion zu aktivieren, und die detektiert werden, bevor die elektronische Vorrichtung den ersten Berührungs- und Haltevorgang detektiert.

10. Verfahren nach einem der Ansprüche 1 bis 9, wobei die Tatsache, dass die elektronische Vorrichtung die erste Funktion verwendet, Folgendes umfasst: die elektronische Vorrichtung empfängt einen Benutzervorgang und führt einen ersten Vorgang an der ersten Funktion durch.

11. Elektronische Vorrichtung, umfassend einen Speicher, einen oder mehrere Prozessoren und ein oder mehrere Programme, wobei, wenn der eine oder die mehreren Prozessoren das eine oder die mehreren Programme ausführen, die elektronische Vorrichtung in die Lage versetzt wird, das Verfahren nach einem der Ansprüche 1 bis 10 durchzuführen.

12. Computerlesbares Speichermedium, umfassend Anweisungen, wobei, wenn die Anweisungen auf einer elektronischen Vorrichtung laufen, die elektronische Vorrichtung in die Lage versetzt wird, das Verfahren nach einem der Ansprüche 1 bis 10 durchzuführen.

13. Computerprogrammprodukt, wobei, wenn das Computerprogrammprodukt auf einem Computer läuft, der Computer in die Lage versetzt wird, das Verfahren nach einem der Ansprüche 1 bis 10 durchzuführen.


**Revendications**

1. Procédé d'activation de fonction, dans lequel le procédé comprend :

   la détection, par un dispositif électronique (101), d'une première opération de toucher prolongé (S103) ; et
   l'activation (S108), par le dispositif électronique, d'une première fonction après qu'une première opération de toucher prolongé a duré une première durée (S107), dans lequel
   la première durée est déterminée sur la base d'une fréquence ou d'un nombre d'utilisations de la première fonction par le dispositif électronique, après activation par le dispositif électronique de la première fonction à l'aide d'une deuxième opération de toucher prolongé à plusieurs reprises.

2. Procédé selon la revendication 1, dans lequel, lorsque la fréquence est supérieure à une première valeur, la première durée est une deuxième valeur, ou lorsque la fréquence est inférieure à une troisième valeur, la première durée est une quatrième valeur, dans lequel la deuxième valeur est inférieure à la quatrième valeur ; ou
   une fréquence supérieure indique une première durée plus courte, et une fréquence inférieure indique une première durée plus longue.

3. Procédé selon la revendication 1 ou 2, dans lequel
   la première opération de toucher prolongé comprend une opération de toucher prolongé sur un bouton physique ou un élément d'interface du dispositif électronique, la première fonction comprend un assistant vocal, et l'assistant vocal est configuré pour surveiller une voix d'un utilisateur et répondre sur la base de la voix.

4. Procédé selon l'une quelconque des revendications 1 à 3, dans lequel, avant la détection, par un dispositif électronique, d'une première opération de toucher prolongé, le procédé comprend également :

   la détection, par le dispositif électronique, d'une troisième opération de toucher prolongé ; et
   l'activation, par le dispositif électronique, de la première fonction après que la troisième opération de toucher prolongé a duré une deuxième durée, dans lequel
   la deuxième durée est différente de la première durée.

5. Procédé selon l'une quelconque des revendications 1 à 4, dans lequel après la détection, par le dispositif électronique, d'une première opération de toucher prolongé, le procédé comprend également :

   la collecte, par le dispositif électronique, de premières informations à l'aide d'un premier capteur, dans lequel les premières informations représentent une probabilité de l'utilisation, par l'utilisateur, de la première fonction du dispositif électronique, dans lequel
la première durée est spécifiquement déterminée sur la base des premières informations et de la fréquence d'utilisation de la première fonction par le dispositif électronique, après activation par le dispositif électronique de la première fonction à l'aide de la deuxième opération de toucher prolongé une pluralité de fois.

6. Procédé selon la revendication 5, dans lequel

le premier capteur comprend un capteur de gravité, et les premières informations comprennent un angle d'inclinaison du dispositif électronique ; et/ou
le premier capteur comprend un capteur de distance, et les premières informations comprennent une distance entre le dispositif électronique et l'utilisateur.

7. Procédé selon l'une quelconque des revendications 1 à 6, dans lequel, après l'activation, par le dispositif électronique, d'une première fonction en réponse à la première opération de toucher prolongé, le procédé comprend également :
après la poursuite de la première opération de toucher prolongé pendant une troisième durée, la désactivation, par le dispositif électronique, de la première fonction et l'activation d'une seconde fonction.

8. Procédé selon l'une quelconque des revendications 1 à 7, dans lequel, avant la détection, par un dispositif électronique, d'une première opération de toucher prolongé, le procédé comprend également :

lorsqu'une première condition est remplie, la détermination, par le dispositif électronique, de la fréquence d'utilisation de la première fonction par le dispositif électronique après que la première fonction a été activée à l'aide de la deuxième opération de toucher prolongé à plusieurs reprises, dans lequel
la première condition comprend, sans toutefois s'y limiter, une ou plusieurs des situations suivantes : le dispositif électronique désactive la première fonction, une durée prédéterminée est atteinte, ou le nombre d'activations de la première fonction par le dispositif électronique à l'aide de la deuxième opération de toucher prolongé atteint un nombre prédéterminé.

9. Procédé selon l'une quelconque des revendications 1 à 8, dans lequel la pluralité de deuxièmes opérations de toucher prolongé constitue tout ou partie des opérations de toucher prolongé utilisées pour activer la première fonction et détectées avant que le dispositif électronique ne détecte la première opération de toucher prolongé.

10. Procédé selon l'une quelconque des revendications 1 à 9, dans lequel le dispositif électronique utilise la première fonction, comprend : la réception, par le dispositif électronique, d'une opération de l'utilisateur et l'exécution d'une première opération sur la première fonction.

11. Dispositif électronique comprenant une mémoire, un ou plusieurs processeurs et un ou plusieurs programmes, dans lequel lorsque les un ou plusieurs processeurs exécutent les un ou plusieurs programmes, le dispositif électronique est activé pour réaliser le procédé selon l'une quelconque des revendications 1 à 10.

12. Support de stockage lisible par ordinateur, comprenant des instructions, dans lequel, lorsque les instructions sont exécutées sur un dispositif électronique, le dispositif électronique est activé pour réaliser le procédé selon l'une quelconque des revendications 1 à 10.

13. Produit de programme informatique, dans lequel lorsque le produit de programme informatique est exécuté sur un ordinateur, l'ordinateur est activé pour réaliser le procédé selon l'une quelconque des revendications 1 à 10.

**User interface 10**

FIG. 1A

**User interface 20**

FIG. 1B

FIG. 2A

User interface 30

FIG. 2B

User interface 10

104a

104

FIG. 3A

User interface 40

FIG. 3B

Electronic device 100

FIG. 4

Record a use behavior of a first function triggered by a touch and hold operation in a period of time ⟶ S101

↓

Determine an invalid wakeup proportion based on the use behavior ⟶ S102

↓

Detect a touch and hold operation ⟶ S103

↓

Obtain a current tilt angle of a device ⟶ S104

↓

Obtain a current distance between the device and a user ⟶ S105

↓

Determine trigger duration ⟶ S106

↓

Determine whether duration of the touch and hold operation exceeds the trigger duration ⟶ S107

Yes ↓                     No ↓

Enable the first function in response to the touch and hold operation ⟶ S108

Do not enable the first function ⟶ S109

FIG. 5

FIG. 6

**EP 4 495 751 B1**

**REFERENCES CITED IN THE DESCRIPTION**

**Patent documents cited in the description**

- CN 202210414857
- CN 106055209 A